# EUROPEAN PATENT SPECIFICATION

(11) **EP 2 503 765 B1**
(45) Date of publication and mention of the grant of the patent: **23.05.2018**
(21) Application number: 11777090.9
(22) Date of filing: 05.01.2011
(51) Int. Cl.: H04M 1/725, H04M 1/65

(54) **METHOD AND TERMINAL FOR LEAVING VIDEO MESSAGES**
VERFAHREN UND ENDGERÄT ZUM HINTERLASSEN VON VIDEONACHRICHTEN
PROCÉDÉ ET TERMINAL PERMETTANT DE DÉPOSER DES MESSAGES VIDÉO

(30) Priority: 07.05.2010 CN 201010171118
(43) Date of publication of application: 26.09.2012
(73) Proprietor: ZTE Corporation, Shenzhen, Guangdong 518057 (CN)
(72) Inventor: PENG, Tao, Guangdong 518057 (CN)
(74) Representative: Schröer, Gernot H.
(86) International application number: PCT/CN2011/070040
(87) International publication number: WO 2011/137669

(56) References cited:
- EP-A1- 2 131 561
- CN-A- 1 921 552
- CN-A- 101 286 344
- CN-A- 101 552 826
- CN-A- 101 610 378
- CN-A- 101 621 482
- US-A1- 2008 260 118

## Description

### Technical Field

The present invention relates to the communication technical field, and more specifically, to a method and a terminal for leaving video messages.

### Background of the Related Art

With the development of the mobile communication technology, video calls have become increasingly popular. The video call service is a point-to-point video communication service, and it can take advantage of a telecommunication network to perform a two-way transmission of images and voice signals of two parties of a call in real-time.

If a calling party would like to make a video call to his/her friends and relatives, to share a beautiful scene around him/her as well as his/her joy, however a called party cannot answer the video call for a variety of reasons, the calling party can only hang up and the scene and the joy have gone at this time. It greatly reduces the user satisfaction, and affects the promotion and usage of the video call service.

The documents, CN101552826A, CN101610378, EP2131561A1 and US2008260118A1, have disclosed the related art of the application.

The document CN101552826A discloses a method and device for achieving an automatic reply of a video phone service, where a preset automatic reply prompt information is provided to the caller and the callee records the video message and ends after the record is over.

The document CN101610378 discloses a method for automatically replying and recording a video phone, where preset contents could be played for the caller when the video phone is in the state of automatic reply and then the information from the caller is recorded.

The document EP2131561A1 discloses a mobile communication terminal having a direct dial function using call history and method for performing the function, where if a user selects one call distinguishing icon displayed on a mobile communication terminal's display unit, a voice call or a video call is sent to the counterpart or a screen on which a message can be written to the counterpart is displayed, according to the call type of the selected call distinguishing icon, and the user can directly select a counterpart and the call type to be sent to the counterpart by selecting one of the call distinguishing icons displayed on the display unit. A desired call distinguishing icon can be selected by entering a command on a touch screen, a keypad, or by voice command.

The document US2008260118A1 discloses an enhanced voicemail system management through user-defined "access rules" that can be modified by a telephone account owner to provide permission and/or set a time duration for recording a message left by an incoming caller.

### Summary of the Invention

The purpose of the present invention is to introduce a method and a terminal for leaving video messages, so as to improve the application scope of a video call as well as the user satisfaction.

In order to achieve the above purpose, the present invention provides a terminal for leaving video messages, which comprises a video message setting module, a video message management module, a video reception and storage module, and a call control module;
the video message setting module is configured to: configure parameters of a video message function;
the video message management module is configured to: manage video message files in a video message storage medium;
the video reception and storage module is configured to: receive and store both audio and video information of a calling party as video message file;
the call control module is configured to: control an entire work process of leaving a video message, and to start the video message function according to configuration parameters when a video call arrives;
wherein, the terminal for leaving video messages further comprises a message timing module, which is configured to: perform timing on the video message; the parameters of the video message function configured by the video message setting module comprise, at least, a time out of a preset time length and a limited time after the time out;
wherein, the message timing module is further configured to determine whether the video message times out at the preset time length; and
the call control module is further configured to: play a prompt of message timeout for the calling party when the message timing module determines that the video message times out, and end the video message within the limited time after the video message times out.

The video message function configured by the video message setting module at least comprises one of the followings: carrying out configuration to start the video message function or to stop the video message function; configuring a video prompt file which is transmitted to the calling party and comprises a prompt file during the video message working process as well as a prompt file when the video message timeouts; configuring different video prompts used by different call numbers; and configuring the preset time length for limiting the video message.

The video message management module is further configured to: support a deletion operation and play operation of the video message; and to associate the video messages with call records, so as to find one or a plurality of corresponding video messages through the call records.

The terminal for leaving video messages further comprises a preset message transmission module, which is configured to: transmit prompt information to the calling party during the video message working process.

The terminal for leaving video messages further comprises a video message work indication module, and the video message work indication module is configured to: display a video message working status, which comprises prompt information of being in the video message working process and prompt information of having a new video message, on an interface of the terminal. In order to achieve the aforementioned purpose, the present invention also provides a method for leaving video messages on a video terminal, and the method comprises:
performing a video message configuration on a video message function of the video terminal; wherein parameters of the video message function are configured; and
receiving and storing content of a video call as a video message in a storage medium of the video terminal, when the video terminal detects the video call from a calling party coming in;
the step of performing the configuration of the parameters of the video message function comprises configuring, at least, a time out of a preset time length and a limited time after the time out;
wherein, the step of receiving and storing content of the video call as a video message in the storage medium of the called video terminal comprises: determining whether the video message times out at the preset time length, playing a prompt of message timeout for the calling party when the video message times out, and ending the video message within the limited time.

The step of performing a video message configuration on a video terminal comprises: the video terminal opens a video message setting module to perform the video message configuration, wherein, the video message configuration comprises at least one of the followings: configuring whether to start the video message or not; carrying out configuration to start up for all incoming calls, group incoming calls, part of incoming calls, or a certain incoming call number; carrying out configuration to start up for all incoming calls, group incoming calls, part of incoming calls, or a certain incoming call number during a certain period of time; carrying out configuration to start up immediately when a call comes in, or to delay a period of time to start up when the video terminal doesn't answer proactively; configuring a prompt file of starting the video message and a prompt audio and video file when message time expires; configuring a maximum time length of a message; configuring whether to store in the video terminal own storage or to store in a extended storage card.

When the video terminal has a call control module, the method further comprises: the call control module detects the video call, and starts a video message function when the video call comes in and preset conditions are all met.

The method further comprises: the call control module transmits a message to the video reception and storage module of the video terminal to store an audio and video file, when detecting that the video call ends.

In summary, with the aforementioned technical scheme, a calling party can store video call content of a transmitting side into a terminal of the opposite side for the opposite side that cannot answer the video call in time due to various reasons, so as to wait for the user of the opposite side to view the content in the future, thus not missing the exciting video of the transmitting side, and improving the application scope of a video call as well as the user satisfaction.

### Brief Description of Drawings

FIG. 1 is a structural schematic diagram of functional modules of a terminal for leaving video messages in accordance with an embodiment of the present invention;
FIG. 2 is an entire flow chart of a video message work process in accordance with an embodiment of the present invention;
FIG. 3 is a detailed flow chart for a called terminal to start the video message in accordance with an embodiment of the present invention;
FIG. 4 is a flow chart of performing video messages after starting a video message function, in accordance with an embodiment of the present invention.

### Preferred Embodiments of the Present Invention

The present invention provides a method for leaving video message and a terminal thereof. Video call content of a transmitting side can be stored into a terminal of the opposite side for the opposite side who cannot answer the video call in time due to various reasons, so as to wait for the user of the opposite side to view the content in the future, thus not missing the exciting video of the transmitting side, and also achieving the video message function.

The technical scheme of the present invention will be illustrated in detail in combination with specific embodiments and accompanying drawings hereinafter. It should be noted that the embodiments of the present invention and the characteristics of the embodiments can be in any combination with each other, in the case of no conflict.

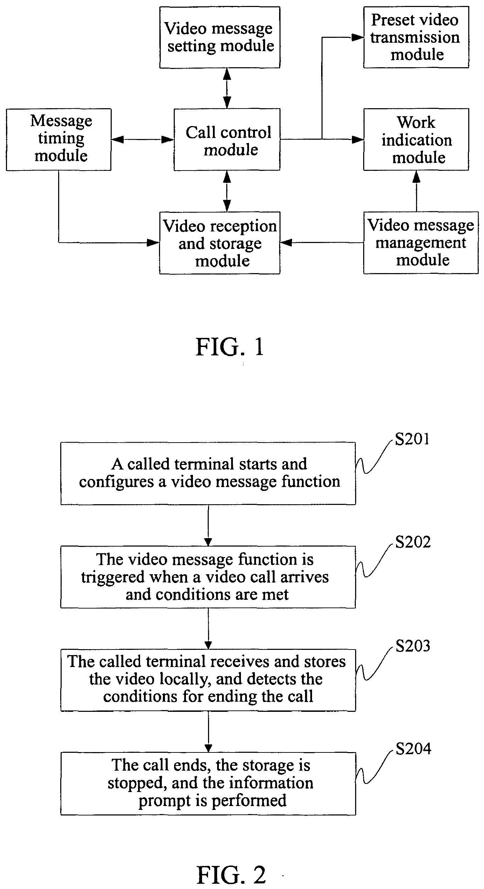

As shown in FIG. 1, the terminal for leaving video messages of the embodiment comprises the following modules of: a video message setting module, a preset video transmission module, a video message work indication module, a video message management module, a video reception and storage module, a message timing module and a call control module.

Wherein, the video message setting module is configured: to configure a video message function, wherein starting the video message function or stopping the video message function can be configured; if the video message function is started, it can be configured whether to start the video message function at once or to configure a period of delay time to start the video message function, after a video call arrives; a video prompt file sent to a calling party is configured, and the video prompt file comprises the configurations of two video prompt files, that is, a prompt file during a video message working process as well as a prompt file when the video message timeouts; it can be configured that different video prompts are used by different call numbers; and a length of time for limiting a video message is configured.

Wherein, the preset video transmission module is configured: to transmit the prompt information to the calling party during the video message work process, to indicate that a called party is performing the video message.

Wherein, the video message work indication module is configured: to display a video message working status, which comprises the prompt information of being in the video message working process and having a new video message and so on, on an interface of the called party.

Wherein, the video message management module is configured: to manage video message files during the video message process. Operations such as deletion, play and so on of the video message are supported; and the video messages are associated with call records, so that the corresponding video messages can be found through the call records.

Wherein, the video reception and storage module is configured: to receive and store both audio and video information of the calling party.

Wherein, the message timing module is configured: to perform timing on the video message.

Wherein, the call control module is configured: to control the entire work process of leaving a video message, including starting the video message function according to the preset parameters, when a video call arrives. The calling party and the called party are prompted during the video message process; and the video message of the calling party is stored at the end of the call.

Especially, the wireless communication terminal mentioned in the present invention can be a mobile phone, alternatively it can be composed of a host and a wireless communication access terminal (such as a wireless data card and a wireless communication module and so on). The embodiment is only illustrated for the mobile phone.

FIG. 2 is step schematic diagram of a method for leaving messages on a terminal in accordance with an embodiment of the present invention, and as shown in FIG. 2, the method comprises the following steps.

In step S201, the called party opens the video message setting module on the mobile phone to perform configurations.

Wherein, whether to start the video message or not can be configured; starting up for all incoming calls, group incoming calls, part of incoming calls, or a certain incoming call number can be configured; starting up for the aforementioned calls during a certain period of time; the video message function can be configured to start immediately when a call comes in, or to delay a period of time to start when the called party doesn't answer proactively; the prompt file of starting the video message as well as a prompt audio and video file when the message time expires can be configured; the maximum time length of a message can be configured; whether to store in a mobile phone own storage or to store in a extended storage card can be configured.

In the embodiment, the video message function is configured to be started; starting up for the number 12345678 is configured; starting up from 8:00 to 10:00 in the morning is configured; staring the video message function without answering a incoming call for 10 seconds is configured; the maximum time length of a message is configured to be two minutes; and storing in a extended TF card is configured.

In step S202, the call control module of the called terminal detects video calls, and starts the video message function when a video call arrives and the preset conditions are all met. At the same time, the call control module invokes the preset video transmission module to transmit preset prompt information to the calling party, to prompt the calling party to leave a video message; it invokes the video message work indication module to indicate that the video message of the called party is in process; and it starts the message timing module to perform timing.

Wherein, the prompt information of being recorded, which is transmitted by the preset video transmission module to the calling party, is the prompt information preset by the video message setting module.

In step S203, the video reception and storage module receives and stores the video message of the caller. The call control module detects whether the call process ends or not, and the message timing module detects whether the message timeouts or not. If the above conditions are met, proceed to step S204.

Wherein, the time threshold of the message timing module is the time length preset in the video message setting module.

Wherein, the message timing module sends a timeout message to the call control module when detecting that the time threshold of the message is met;
wherein, if the message timeouts, the call control module invokes the preset video transmission module to transmit a prompt to the calling party, and ends the call within the limited time;
in the embodiment, it is configured that the call is ended after a timeout for 10 seconds;
wherein, during the video message process, the called party withdraws from recording the video message to transmit the current audio and video to the calling party if the called party needs to answer the video call, and both parties make the video call.

In step 204, the call ends, and the video message is stopped. The call control module transmits a message to the video reception and storage module to store the audio and video file, when detecting the end of call; the video message management module makes the video message correspond to the call record, and invokes the video message indication module to prompt the information that there is one new video message to user at the same time.

In particular, the prompt information transmitted to the calling party can be a video, audio and picture.

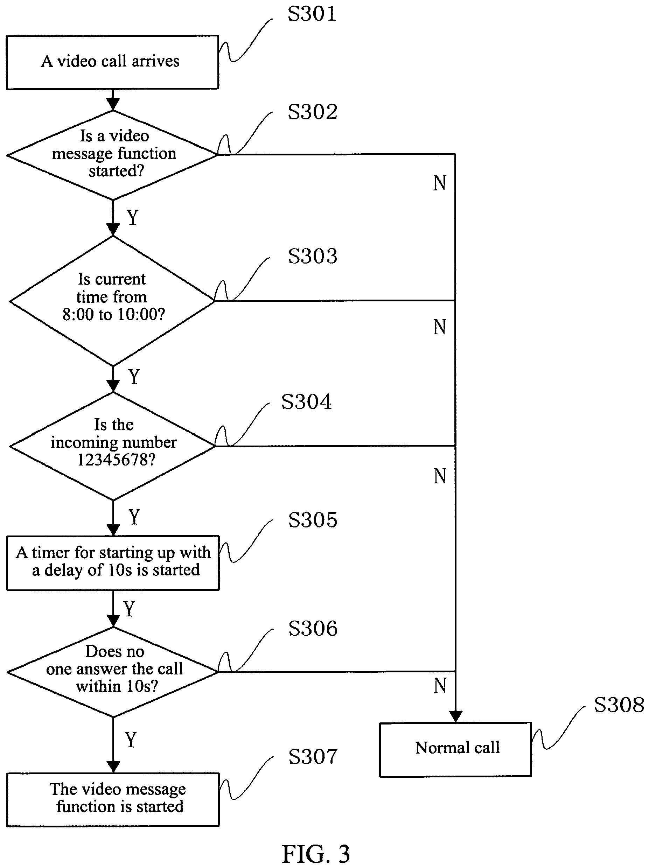

FIG. 3 shows a detailed flow chart for a called terminal to start a video message function, and comprises the following steps.

In step S301, a video call arrives;
in step S302, it is judged whether a video message function is configured to be started or not. If not started, skip to step S308; otherwise, proceed to step S303;
in step S303, it is judged whether the time is from 8:00 to 10:00 or not when the call arrives. If not, skip to step S308; if yes, proceed to step S304;
in step S304, it is judged whether the incoming call number is 12345678 or not. If not, skip to step S308; if yes, proceed to step S305;
in step S305, a timer for starting up with a delay is started;
in step S306, it is judged whether the called party answers the call proactively within 10 seconds. If yes, skip to step S308; otherwise, proceed to step S307; in step S307, the video message function is started;
in step S308, the call is performed normally.

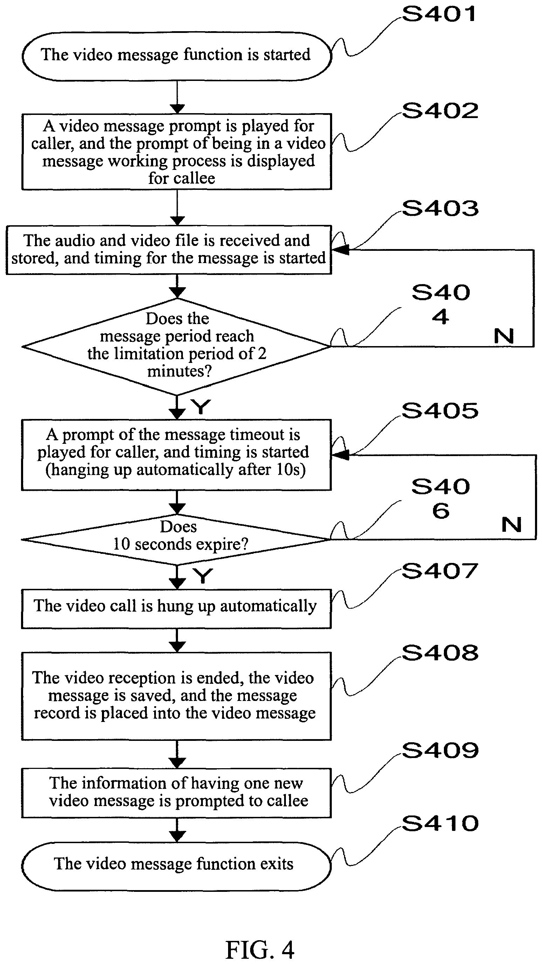

FIG. 4 shows a flow chart of performing video messages after starting a video message function in accordance with an embodiment of the present invention, and comprises following steps.

In step S401, the video message function is started;
in step S402, a video message prompt is played for the caller, and the prompt of being in a video message working process is displayed on an interface of the called terminal;
in step S403, the terminal receives and stores the audio and video file, and performs timing on the message;
in step S404, it is judged whether the message time reaches the preset limitation of 2 minutes. If not, return to step S403; otherwise, proceed to step S405;
in step S405, a prompt of message timeout is played for the caller, and timing is started;
in step S406, it is judged whether 10 seconds expires. If no, return to step S405; otherwise, proceed to step S407;
in step S407, the terminal hangs up the video call automatically;
in step S408, the video reception is ended, the video message is saved, and the message record is placed into the video message;
in step S409, the information of having one new video message is prompted to callee;
in step S410, the video message function exits.

In particular, the process will skip to step S408 immediately, if either the called party or the calling party hangs up to terminate the video call during the stage from step S401 to step S408.

In summary, the embodiments of the present invention provide a method for implementing a video message and a working process, so as to improve the application scope of a video call as well as the user satisfaction.

The terminal for leaving video messages and the method for leaving video messages on the terminal described by the present invention make the applications of video calls on terminals richer and more convenient and improve the application scope of a video call as well as the user satisfaction. Adopting the present invention, a calling party can leave a video message for a called party in the case that no one answers the video call or it is inconvenient for the called party to answer the video call, and the called party can store the video message information locally, including audio as well as video, furthermore the video message can be played back for unlimited times at any time. Thus the user satisfaction of the video call is greatly improved.

Those skilled in the technical field should understand that all or parts of steps of the aforementioned method can be completed by programs instructing the related hardware, and the programs can be stored in a computer readable storage medium, such as a read-only memory, a disk, or a CD-ROM and so on. Alternatively, all or parts of steps of the aforementioned embodiments can be implemented with one or more integrated circuits. Correspondingly, each module or unit in the aforementioned embodiments can be implemented in the form of hardware, as well as software functional modules. The present invention is not limited to any specific forms of combinations of hardware and software.

### Industrial Applicability

The terminal for leaving video messages and the method for leaving video messages on the terminal described by the present invention make the applications of video calls on terminals richer and more convenient and improve the application scope of a video call as well as the user satisfaction. Adopting the present invention, a calling party can leave a video message for a called party in the case that no one answers the video call or it is inconvenient for the called party to answer the video call, and the called party can store the video message information locally, including audio as well as video, furthermore the video message can be played back for unlimited times at any time. Thus the user satisfaction of the video call is greatly improved.

## Claims

1. A terminal for leaving video messages, comprising a video message setting module, a video message management module, a video reception and storage module and a call control module;
the video message setting module being configured to: configure parameters of a video message function;
the video message management module being configured to: manage video message files in a video message storage medium;
the video reception and storage module being configured to: receive and store both audio and video information of a calling party as video message file;
the call control module being configured to: control an entire work process of leaving a video message, and to start the video message function according to configuration parameters when a video call arrives; wherein, the terminal for leaving video messages further comprises a message timing module, which is configured to: perform timing on the video message;
**characterized in that**,
the parameters of the video message function configured by the video message setting module comprise, at least, a time out of a preset time length and a limited time after the time out;
the message timing module is further configured to determine whether the video message times out at the preset time length; and
the call control module is further configured to: play a prompt of message timeout for the calling party when the message timing module determines that the video message times out, and end the storing of both audio and video information of the calling party within the limited time after the video message times out.

2. The terminal for leaving video messages of claim 1, wherein: the video message function configured by the video message setting module at least comprises one of followings: carrying out configuration to start the video message function or to stop the video message function; configuring a video prompt file which is transmitted to the calling party and comprises a prompt file during video message working process and a prompt file when the video message timeouts; configuring different video prompts used by different call numbers; and configuring the preset time length for limiting the video message.

3. The terminal for leaving video messages of claim 1, wherein: the video message management module is further configured to: support a deletion operation and play operation of the video message; and to associate the video messages with call records, so as to find one or a plurality of corresponding video messages through the call records.

4. The terminal for leaving video messages of claim 1, wherein: the terminal for leaving video messages further comprises a preset message transmission module, which is configured to: transmit prompt information to the calling party during the video message working process.

5. The terminal for leaving video messages of claim 1, wherein: the terminal for leaving video messages further comprises a video message work indication module, and the video message work indication module is configured to: display a video message working status, which comprises prompt information of being in the video message working process and prompt information of having a new video message, on an interface of the terminal.

6. A method for leaving video messages on a video terminal, comprising: performing a video message configuration on a video message function of the video terminal (S201); wherein parameters of the video message function are configured; and
receiving and storing content of a video call as a video message in a storage medium of the video terminal when the video terminal detects the video call from a calling party coming in (S202-S204);
**characterized in that**,
the step of performing the configuration of the parameters of the video message function comprises configuring, at least, a time out of a preset time length and a limited time after the time out;
the step of receiving and storing content of the video call as a video message in the storage medium of the called video terminal comprises: determining whether the video message times out at the preset time length, playing a prompt of message timeout for the calling party when the video message times out, and ending the storing of the video message within the limited time after the video message times out.

7. The method for leaving video messages on the video terminal of claim 6, wherein the video message configuration further comprises at least one of followings: configuring whether to start the video message or not; carrying out configuration to start up for all incoming calls, group incoming calls, part of incoming calls, or a certain incoming call number; carrying out configuration to start up for all incoming calls, group incoming calls, part of incoming calls, or a certain incoming call number during a certain period of time; carrying out configuration to start up immediately when a call comes in, or to delay a period of time to start up when the video terminal doesn't answer proactively; configuring a prompt file of starting the video message and a prompt audio and video file when message time expires; configuring whether to store in the video terminal own storage or to store in a extended storage card.

8. The method for leaving video messages on the video terminal of claim 6, wherein: when the terminal has a call control module, the method further comprises: the call control module detecting the video call, and starting a video message function when the video call comes in and preset conditions are all met.

9. The method for leaving video messages on the video terminal of claim 8, wherein the method further comprises: the call control module transmitting a message to a video reception and storage module of the video terminal to store an audio and video file when detecting that the video call ends.

## Patentansprüche

1. Endgerät zum Hinterlassen von Videonachrichten, aufweisend: ein Videonachrichteinstellungsmodul, ein Videonachrichtverwaltungsmodul, ein Videoempfangs- und -speichermodul und ein Anrufsteuerungsmodul; wobei das Videonachrichteinstellungsmodul dafür ausgelegt ist, Parameter einer Videonachrichtfunktion zu konfigurieren;
wobei das Videonachrichtverwaltungsmodul dafür ausgelegt ist, Videonachrichtdateien in einem Videonachrichtspeichermedium zu verwalten; wobei das Videoempfangs- und -speichermodul konfiguriert ist, sowohl Audio- als auch Videoinformationen einer anrufenden Partei als Videonachrichtdatei zu empfangen und zu speichern;
wobei das Anrufsteuerungsmodul dazu eingerichtet ist, einen gesamten Betriebsvorgang zum Hinterlassen einer Videonachricht zu steuern und die Videonachrichtfunktion in Abhängigkeit von Konfigurationsparametern zu beginnen, wenn ein Videoanruf ankommt;
wobei das Endgerät zum Hinterlassen von Videonachrichten ferner ein Nachrichtzeitsteuerungsmodul aufweist, das dazu eingerichtet ist, eine Zeitsteuerung an der Videonachricht durchzuführen;
**dadurch gekennzeichnet, dass**
die Parameter der Videonachrichtfunktion, die durch das Videonachrichteinstellungsmodul konfiguriert sind, mindestens eine Zeitüberschreitung einer voreingestellten Zeitspanne und eine begrenzte Zeit nach der Zeitüberschreitung beinhalten;
das Nachrichtzeitsteuerungsmodul ferner dazu eingerichtet ist, zu ermitteln, ob die Videonachricht bei der voreingestellten Zeitspanne die Zeit überschreitet; und
das Anrufsteuerungsmodul ferner dafür ausgelegt ist, eine Ansage einer Nachrichtzeitüberschreitung für die anrufende Partei wiederzugeben, wenn das Nachrichtzeitsteuerungsmodul ermittelt, dass die Videonachricht die Zeit überschreitet, und die Speicherung sowohl der Audio- als auch der Videoinformationen der anrufenden Partei innerhalb der begrenzten Zeit zu beenden, nachdem die Videonachricht die Zeit überschritten hat.

2. Endgerät zum Hinterlassen von Videonachrichten nach Anspruch 1, wobei die Videonachrichtfunktion, die durch das Videonachrichteinstellungsmodul konfiguriert ist, mindestens eines von Folgendem aufweist: Durchführen einer Konfiguration, um die Videonachrichtfunktion zu beginnen oder die Videonachrichtfunktion zu beenden; Konfigurieren einer Videoansagedatei, die zu der anrufenden Partei übertragen wird und eine Ansagedatei während eines Videonachrichtverarbeitungssvorgangs und eine Ansagedatei aufweist, wenn die Videonachricht die Zeit überschreitet; Konfigurieren unterschiedlicher Videoansagen, die durch unterschiedliche Anrufnummern genutzt werden; und Konfigurieren der voreingestellten Zeitspanne, um die Videonachricht zu begrenzen.

3. Endgerät zum Hinterlassen von Videonachrichten nach Anspruch 1, wobei das Videonachrichtverwaltungsmodul ferner dafür ausgelegt ist, einen Löschbetrieb und einen Wiedergabebetrieb der Videonachricht zu stützen; und die Videonachrichten Anrufdatensätzen zuzuordnen, um eine oder mehrere entsprechende Videonachrichten durch die Anrufdatensätze zu finden.

4. Endgerät zum Hinterlassen von Videonachrichten nach Anspruch 1, wobei das Endgerät zum Hinterlassen von Videonachrichten ferner ein voreingestelltes Nachrichtübertragungsmodul enthält, das dazu eingerichtet ist, während des Videonachrichtverarbeitungsvorgangs Ansageinformationen zu der anrufenden Partei zu übertragen.

5. Endgerät zum Hinterlassen von Videonachrichten nach Anspruch 1, wobei das Endgerät zum Hinterlassen von Videonachrichten ferner ein Videonachrichtarbeitsanzeigemodul aufweist, und das Videonachrichtarbeitsanzeigemodul dazu eingerichtet ist, einen Videonachrichtverarbeitungszustand anzuzeigen, der Ansageinformationen des Befindens im Videonachrichtverarbeitungssvorgang und Ansageinformationen des Vorhandenseins einer neuen Videonachricht an einer Schnittstelle des Endgerätes beinhaltet.

6. Verfahren zum Hinterlassen von Videonachrichten auf einem Videoendgerät, umfassend:
Durchführen einer Videonachrichtkonfiguration an einer Videonachrichtfunktion des Videoendgeräts (S201), wobei Parameter der Videonachrichtfunktion konfiguriert werden; und
Empfangen und Speichern eines Inhalts eines Videoanrufs als eine Videonachricht in einem Speichermedium des Videoendgeräts, wenn das Videoendgerät den ankommenden Videoanruf einer anrufenden Partei erfasst (S202-S204);
**dadurch gekennzeichnet, dass**
der Schritt des Durchführens der Konfiguration der Parameter der Videonachrichtfunktion ein Konfigurieren mindestens einer Zeitüberschreitung einer voreingestellten Zeitspanne und einer begrenzten Zeit nach der Zeitüberschreitung beinhaltet;
der Schritt des Empfangens und Speicherns eines Inhalts des Videoanrufs als eine Videonachricht in dem Speichermedium des angerufenen Videoendgeräts beinhaltet:
Ermitteln, ob die Videonachricht die Zeit bei der voreingestellten Zeitspanne überschreitet, Wiedergeben einer Ansage einer Nachrichtzeitüberschreitung für die anrufende Partei, wenn die Videonachricht die Zeit überschreitet, und Beenden des Speicherns der Videonachricht innerhalb der begrenzten Zeit, nachdem die Videonachricht die Zeit überschritten hat.

7. Verfahren zum Hinterlassen von Videonachrichten auf dem Videoendgerät nach Anspruch 6,
wobei die Videonachrichtkonfiguration ferner mindestens eines von Folgendem umfasst: Konfigurieren, ob die Videonachricht zu beginnen ist oder nicht; Durchführen einer Konfiguration eines Hochfahrens für sämtliche ankommenden Anrufe, für eine Gruppe ankommender Anrufe, für einen Teil ankommender Anrufe oder für eine gewisse ankommende Anrufnummer; Durchführen einer Konfiguration eines Hochfahrens für sämtliche ankommenden Anrufe, für eine Gruppe ankommender Anrufe, für einen Teil ankommender Anrufe oder für eine gewisse ankommende Anrufnummer während einer gewissen Zeitspanne; Durchführen einer Konfiguration eines unmittelbaren Hochfahrens, wenn ein Anruf ankommt oder einer Verzögerung einer Zeitspanne für das Hochfahren, wenn das Videoendgerät nicht voraushandelnd antwortet; Konfigurieren einer Ansagedatei des Startens der Videonachricht und einer Ansageaudio- und -videodatei, wenn eine Nachrichtzeitspanne abläuft; Konfigurieren, ob in dem eigenen Speicher des Videoendgeräts zu speichern ist oder ob auf einer erweiterten Speicherkarte zu speichern ist.

8. Verfahren zum Hinterlassen von Videonachrichten auf dem Videoendgerät nach Anspruch 6,
wobei, wenn das Endgerät ein Anrufsteuerungsmodul aufweist, das Verfahren ferner umfasst: Erfassen des Videoanrufs durch das Anrufsteuerungsmodul und Starten einer Videonachrichtfunktion, wenn der Videoanruf ankommt und sämtliche voreingestellten Bedingungen erfüllt sind.

9. Verfahren zum Hinterlassen von Videonachrichten auf dem Videoendgerät nach Anspruch 8,
wobei das Verfahren ferner umfasst: Übertragen einer Nachricht durch das Anrufsteuerungsmodul zu einem Videoempfangs- und -speichermodul des Videoendgeräts, eine Audio- und Videodatei zu speichern, wenn erfasst wird, dass der Videoanruf endet.

## Revendications

1. Terminal pour laisser des messages vidéo, comprenant un module de définition de message vidéo, un module de gestion de message vidéo, un module de réception et de stockage de vidéo et un module de contrôle d'appels;
le module de définition de message vidéo étant configuré: pour configurer des paramètres d'une fonction de message vidéo;
le module de gestion de message vidéo étant configuré: pour gérer des fichiers de messages vidéo sur un support de stockage de message vidéo;
le module de réception et de stockage de vidéo étant configuré: pour recevoir et stocker des informations à la fois audio et vidéo d'un appelant sous la forme d'un fichier de message vidéo;
le module de contrôle d'appels étant configuré: pour commander tout un processus de traitement consistant à laisser un message vidéo et pour mettre en marche la fonction de message vidéo en fonction de paramètres de configuration lorsqu'un appel vidéo arrive;
dans lequel le terminal pour lasser des messages vidéo comprend en outre un module de synchronisation de message qui est configuré: pour réaliser une synchronisation concernant le message vidéo;
**caractérisé en ce que**
les paramètres de la fonction de message vidéo configurés par le module de définition de message vidéo comprennent, au moins, une expiration d'une durée prédéfinie et un temps limité après l'expiration;
le module de synchronisation de message est en outre configuré pour déterminer si le message vidéo expire pendant la durée prédéfinie; et
le module de contrôle d'appels est en outre configuré: pour lire une invite d'expiration de message pour l'appelant lorsque le module de synchronisation de message détermine que le message vidéo expire et pour mettre fin au stockage des informations à la fois audio et vidéo de l'appelant pendant le temps limité après l'expiration du message vidéo.

2. Terminal pour laisser des messages vidéo selon la revendication 1, dans lequel: la fonction de message vidéo configurée par le module de définition de message vidéo consiste: à réaliser une configuration pour mettre en marche la fonction de message vidéo ou pour arrêter la fonction de message vidéo; et/ou à configurer un fichier d'invite vidéo qui est transmis à l'appelant et comprend un fichier d'invite pendant un processus de traitement de message vidéo et un fichier d'invite lorsque le message vidéo expire; et/ou à configurer différentes invites de vidéo utilisées par différents numéros d'appel; et/ou à configurer la durée prédéfinie pour limiter le message vidéo.

3. Terminal pour laisser des messages vidéo selon la revendication 1, dans lequel: le module de gestion de message vidéo est en outre configuré: pour prendre en charge une opération de suppression et une opération de lecture du message vidéo; et pour associer les messages vidéo à des enregistrements d'appel de sorte à trouver un message vidéo correspondant ou une pluralité de messages vidéo correspondants dans les enregistrements d'appel.

4. Terminal pour laisser des messages vidéo selon la revendication 1, dans lequel: le terminal pour laisser des messages vidéo comprend en outre un module de transmission de message prédéfini qui est configuré: pour transmettre des informations d'invite à l'appelant pendant le processus de traitement de message vidéo.

5. Terminal pour laisser des messages vidéo selon la revendication 1, dans lequel: le terminal pour laisser des messages vidéo comprend en outre un module d'indication de traitement de message vidéo et le module d'indication de traitement de message vidéo est configuré: pour afficher un état de traitement de message vidéo qui comporte des informations d'invite pour être dans le processus de traitement de message vidéo, et des informations d'invite pour avoir un nouveau message vidéo, sur une interface du terminal.

6. Procédé pour laisser des messages vidéo sur un terminal vidéo, consistant:
à réaliser une configuration de message vidéo sur une fonction de message vidéo du terminal vidéo (S201); dans lequel des paramètres de la fonction de message vidéo sont configurés; et
à recevoir et à stocker un contenu d'un appel vidéo sous la forme d'un message vidéo dans un support de stockage du terminal vidéo lorsque le terminal vidéo détecte l'entrée de l'appel vidéo provenant d'un appelant (S202 à S204) ;
**caractérisé en ce que**
l'étape de réalisation de. La configuration des paramètres de la fonction de message vidéo consiste à configurer, au moins, une expiration d'une durée prédéfinie et un temps limité après l'expiration;
l'étape de réception et de stockage d'un contenu de l'appel vidéo sous la forme d'un message vidéo dans le support de stockage du terminal vidéo appelé consiste: à déterminer si le message vidéo expire pendant la durée prédéfinie, à lire une invite d'expiration de message pour l'appelant lorsque le message vidéo expire et à mettre fin au stockage du message vidéo pendant le temps limité après l'expiration du message vidéo.

7. Procédé pour laisser des messages vidéo sur le terminal vidéo selon la revendication 6,
dans lequel la configuration de message vidéo consiste: à configurer s'il faut mettre en marche le message vidéo ou non; et/ou à réaliser une configuration pour lancer tous les appels entrants, pour regrouper des appels entrants, une partie des appels entrants ou un certain nombre d'appels entrants; et/ou à réaliser une configuration pour lancer tous les appels entrants, pour regrouper des appels entrants, une partie des appels entrants ou un certain nombre d'appels entrants pendant une certaine période de temps; et/ou à réaliser une configuration pour mettre immédiatement en marche lorsqu'un appel entre, ou pour retarder une période de temps pour mettre en marche lorsque le terminal vidéo ne répond pas de manière proactive; et/ou à configurer un fichier d'invite de début du message vidéo et un fichier audio et vidéo d'invite lorsqu'un temps de message expire; et/ou à configurer s'il faut stocker dans la propre mémoire du terminal vidéo ou s'il faut stocker dans une carte de stockage étendue.

8. Procédé pour laisser des messages vidéo sur le terminal vidéo selon la revendication 6,
dans lequel: lorsque le terminal comporte un module de contrôle d'appels, le procédé comprend en outre l'étape suivante: le module de contrôle d'appels détecte l'appel vidéo et met en marche une fonction de message vidéo lorsque l'appel vidéo entre et que des conditions prédéfinies sont toutes remplies.

9. Procédé pour laisser des messages vidéo sur le terminal vidéo selon la revendication 8,
dans lequel le procédé comprend en outre l'étape suivante: le module de contrôle d'appels transmet un message à un module de réception et de stockage de vidéo du terminal vidéo pour stocker un fichier audio et vidéo lors de la détection que l'appel vidéo est terminé.
